# EUROPÄISCHE PATENTANMELDUNG

(11) **EP 0 916 536 A2**
(43) Veröffentlichungstag der Anmeldung: **19.05.1999**
(21) Anmeldenummer: 98119070.5
(22) Anmeldetag: 08.10.1998
(51) Int. Cl.: B60J 7/22, B60J 7/057, B60J 7/00

(54) **Verfahren zur Unterdrückung periodischer Druckänderungen in einem von einer Aussenströmung umströmten und mit einer Öffnung versehenem Hohlraum**

(30) Priorität: 13.11.1997 DE 19750218
(71) Anmelder: DORNIER GmbH, 88039 Friedrichshafen (DE)
(72) Erfinder: Borchers, Ingo Udo, Dr., 88690 Uhldingen-Mühlhofen (DE); Schauwecker, Ludwig, 88718 Daisendorf (DE)
(74) Vertreter: Meel, Thomas

(57) **Zusammenfassung**

Die Erfindung betrifft Verfahren zur Unterdrückung periodischer Druckänderungen in einem von einer Außenströmung umströmten und mit einer Öffnung (**DA**) versehenem Hohlraum (**RI**). Dabei wird eine der aktuellen Druckänderung im Innern des Hohlraums (**RI**) entgegengerichtete Änderung der Strömungsrichtung der Außenströmung bewirkt.

## Beschreibung

Die Erfindung betrifft ein Verfahren Zur Unterdrückung periodischer Druckänderungen in einem von einer Außenströmung umströmten und mit einer Öffnung versehenem Hohlraum.

Häufig treten bei umströmten Hohlräumen periodische Druckschwankungen auf, die erhebliche Druckamplituden erreichen können. Bei Flugzeugen wurden solche Erscheinungen z.B. an Fahrwerkschächten oder offenen Behältern beobachtet.

Im Fahrzeugbau sind derartige Druckschwankungen z.B. als Schiebedachwummern bekannt. In vielen Fahrzeugen mit Schiebedach tritt bei geöffnetem Dach, bevorzugt im Geschwindigkeitsbereich zwischen 40 und 60 km/h, eine periodische, resonanzartige Druckänderung im Innenraum auf, die als tieffrequentes Geräusch wahrgenommen wird und unerwünscht ist.

Aus der DE 40 39 485 C1 ist ein Windabweiser zur Verminderung des Schiebedachwummerns bei Kraftfahrzeugen bekannt. Der Windabweiser ist quer zur Luftströmung und parallel zum vorderen Rand der Schiebedachöffnung angeordnet und steht von der Fahrzeugkontur nach außen bzw. schräg nach hinten oben ab.

Ein Verfahren zur Verminderung des Schiebedachwummerns ist auch aus der DE 196 33 188 C1 bekannt. Dabei wird das Wummer-Geräusch mit einem Mikrofon im Innern der Fahrzeugkabine gemessen. Das Ausgangssignal des Mikrofons wird als Steuergröße für ein Verkleinern der Schiebdedachöffnung auf ein solches Maß verwendet, daß keine störenden Wummer-Geräusche mehr auftreten.

Aufgabe der Erfindung ist es, eine Verfahren zu schaffen, mit dem periodische Druckschwankungen in Form von Wummer-Geräuschen schnell und wirksam unterdrückt werden können.

Diese Aufgabe wird mit dem Verfahren nach Anspruch 1 gelöst. Vorteilhafte Ausführungen der Erfindung sind Gegenstand von Unteransprüchen.

Nach Erkenntnissen der Erfinder wird die periodische Druckänderung durch eine Rückkopplungseffekt verursacht, dessen Einschwingvorgang etwas vereinfacht wie folgt beschrieben werden kann:

Eine beliebig kleine Störung, z.B. Strömungsturbulenz, an der Vorderkante der Öffnung (als "Vorderkante'' wird in dieser Anmeldung stets die der Anströmung zugewandte Kante bezeichnet) hat zur Folge, daß die Außenströmung etwas in den Hohlraum umgelenkt wird. Dadurch steigt der Druck in diesem Raum über den statischen Außendruck, was dazu führt, daß ein Druckausgleich nach außen durch die Öffnung stattfindet. Die bei diesem Druckausgleich quer zur Außenströmung auftretenden Strömungskomponenten (von innen nach außen) lenken die Außenströmung an der Vorderkante der Öffnung um, was dazu führt, daß jetzt im Hohlraum Unterdruck entsteht. Beim darauffolgenden Druckausgleich wird die Außenströmung wieder in den Innenraum umgelenkt, was erneut zum Druckanstieg führt. Die Amplitude der Druckschwankungen nimmt mit jeder Periode bis zu einem Grenzwert zu, der theoretisch maximal dem Staudruck der Außenströmung entsprechen kann.

Gemäß der Erfindung wird der beschriebene Rückkopplungsprozeß unterbrochen, indem die Strömungsrichtung der Außenströmung aktiv und phasenrichtig geändert wird:
Ein Drucksensor, z.B. ein Mikrofon, im Innern des Hohlraums mißt, ob gerade Druckanstieg oder Druckabfall stattfindet. Ein vom Mikrofonsignal angesteuerter Aktuator sorgt dafür, daß eine der aktuellen Druckänderung im Hohlraum entgegengerichtete Umlenkung der Außenströmung vorgenommen wird. Durch die phasenrichtige Umlenkung klingen die periodischen Druckschwankungen schnell ab. Die richtige Phasenlage zwischen Druckamplitude und Aktuatorsignal ist vom Aktuatortyp abhängig und läßt sich experimentell leicht ermitteln.

Auf die gleiche Weise können mit dem erfindungsgemäßen Verfahren nicht nur vorhandene periodische Druckschwankungen reduziert oder ausgelöscht werden, sondern es kann bereits deren Entstehung verhindert werden, indem beliebig auftretende Störungen an der Öffnung sofort ausgeglichen werden.

Die erfindungsgemäße Änderung der Anströmrichtung kann dabei direkt z.B. durch Umlenkflügel, oder indirekt z.B. durch in der Nähe der Öffnungsvorderkante induzierte Querströmung (nach innen oder außen) erfolgen.

Ausführungen der Erfindung werden unter Bezugnahme auf Zeichnungen am Beispiel des Schiebedachwummerns in Fahrzeugen dargestellt. Im folgenden wird deshalb der Hohlraum auch als Fahrzeuginnenraum, sowie die Öffnung als Schiebedachausschnitt bezeichnet.

Grundsätzlich ist die erfindungsgemäße Lösung aber auf alle an einer offenen Seite umströmten Hohlräume, z.B. an Flugzeugen, Raketen und Schiffen übertragbar.

Es zeigen:
Fig. 1 das Blockschaltbild eines Regelkreises zur Durchführung des erfindinngsgemäßen Verfahrens;
Fig. 2 eine erste Ausführung des erfindungsgemäßen Verfahrens, bei der die Beeinflussung der Außenströmung durch phasenrichtig oszillierende Umlenkflügel an der Vorderkante des Dachausschnittes erfolgt;
Fig. 3 eine zweite Ausführung des erfindungsgemäßen Verfahrens, bei der die Beeinflussung der Außenströmung durch phasenrichtige Erzeugung von Querströmungskomponenten erfolgt, und zwar mittels Lautsprecher, die unmittelbar hinter der Vorderkante des Dachausschnitts angebracht sind;
Fig. 4 eine dritte Ausführung des erfindungsgemäßen Verfahrens, bei der die phasenrichtige Erzeugung von Querströmungskomponenten durch Ausblasen bzw. Absaugen von Gas an der Vorderkante des Dachausschnittes erfolgt;
Fig. 5 eine vierte Ausführung des erfindungsgemäßen Verfahrens, bei der die Beeinflussung der Außenströmung durch phasenrichtige Erzeugung von Druckänderungen im Innenraum eines PKW mittels eines oder mehrerer Lautsprecher erfolgt. Die erforderliche Querströmung an der Vorderkante des Dachausschnitts wird in dieser Ausführung indirekt durch den auf die erzeugte Druckänderung folgenden Druckausgleich erreicht.
Fig. 6 eine fünfte Ausführung des erfindungsgemäßen Verfahrens, bei der die Beeinflussung der Außenströmung durch phasenrichtige Erzeugung von Druckänderungen im Innenraum eines PKW mittels gesteuert oszillierender Teile der den Innenraum begrenzenden Flächen (in dem dargestellten Fall des Kraftfahrzeug-Dachs) erfolgt.
Fig. 7 Frequenzspektren, die ohne und mit Einsatz des erfindungsgemäßen Verfahrens gemessen wurden (Abszisse: Frequenz in Hz, Ordinate: Schalldruck in dB bezogen auf 5*10⁻⁵N/m²).
Fig. 8 Beispiel für den Verlauf der Druckamplituden bei Einsatz des erfindungsgemäßen Verfahrens (Abszisse: Zeit in Sekunden, Ordinate: Druck in Pascal).

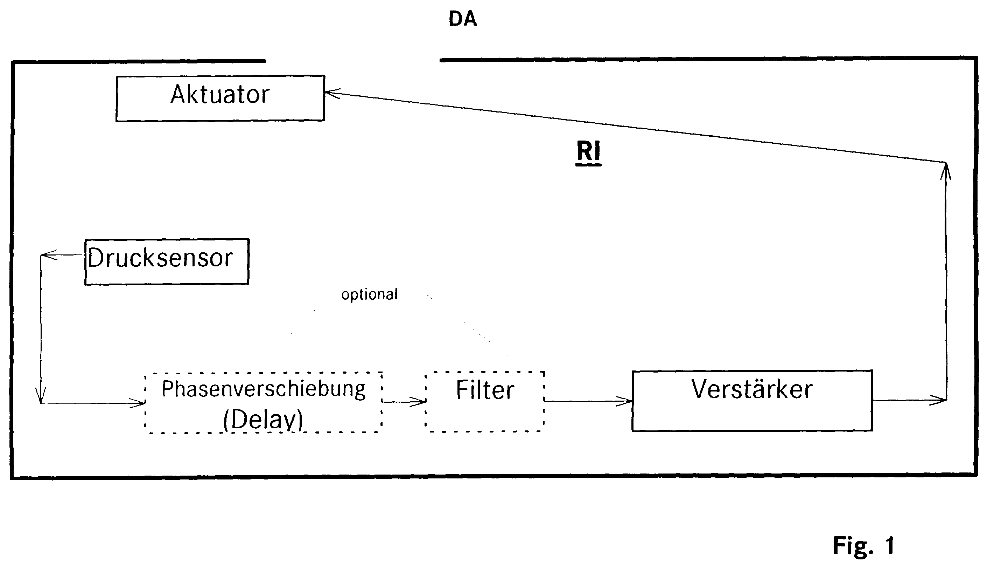

Fig. 1 zeigt das Blockschaltbild eines Regelkreises zur Durchführung des erfindungsgemäßen Verfahrens. **RI** bezeichnet den Hohlraum, **DA** die umströmte Öffnung des Hohlraums. Der Druck im Hohlraum **RI** wird durch einen Drucksensor (z.B. Mikrofon) gemessen. Das Sensorsignal wird nach geeigneter Aufbereitung einem Aktuator zugeführt, der die Änderung der Außenströmung veranlaßt. Unter geeigneter Aufbereitung ist im allgemeinen die Verstärkung, eventuell eine Filterung und eine Zeitverzögerung (Phasenverschiebung) des Signals zu verstehen. Der Aktuator ist in dieser Ausführung z.B. nahe der Vorderkante der Öffnung **DA** angeordnet.
Alle Vorrichtungen, bei denen ein elektro-dynamischer Aktuator (z.B. Lautsprecher, Lautsprecherspule) als Antrieb vorgesehen ist, können auch ohne das Gerät zur Phasenverschiebung (Delay) realisiert werden, weil dieser Aktuatortyp die erforderliche Phasenverschiebung funktionsbedingt selbst erzeugt. Eine Änderung der Verstärker-Einstellung ist nicht erforderlich, weil bei richtigem Anschluß des Aktuators mit abnehmenden Druckschwankungen auch das zur Ansteuerung des Verstärkers verwendete Mikrofonsignal zurückgeht (stabiler Regelkreis).

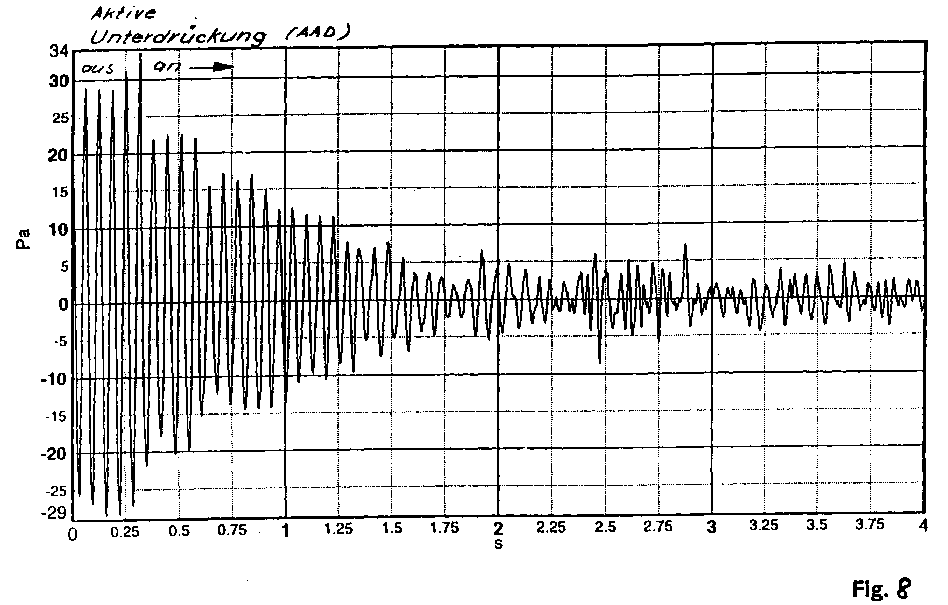

Ein konkreter Ablauf der Verfahrens wird im folgenden beschrieben:
Der Drucksensor soll zu einem beliebigen Zeitpunkt feststellen, daß der Innendruck im Hohlraum gegenüber dem Mitteldruck steigt. Das Ausgangssignal des Drucksensors wird verstärkt und dem Aktuator so zugeführt, daß dieser die Außenströmung nach außen umlenkt und damit den Druck im Innenraum senkt. Der sinkende Druck im Innenraum führt nun dazu, daß der Drucksensor einen kleineren Druck mißt, dementsprechend ein kleineres Signal an den Aktuator schickt, welcher wiederum die Außenströmung weniger umlenkt. Im Idealfall wären die Druckschwankungen gestoppt, sobald der mittlere (stationäre) Innendruck erreicht ist. Infolge der Trägheit der am Vorgang beteiligten Luftmassen tritt aber der neue Zustand ohne Druckschwankungen (korrekt: mit sehr niedrigen Druckschwankungen) immer erst nach einigen Perioden mit abnehmenden Druckamplituden auf. Fig. 8 zeigt den Zeitverlauf der Druckschwankungen in einem fahrenden PKW vor und nach dem Zeitpunkt, an dem das System zur Unterdrückung der Druckschwankungen aktiviert wurde.

In einer mehr mathematisch-technischen Betrachtungsweise läßt sich die Funktion des Verfahrens auch wie folgt erklären:
Durch die im Regelkreis immer vorhandene Phasenverschiebung des Drucksignals (um ca. 90°) entsteht ein Signal, das nicht mehr dem Druck, sondern der Änderungsgeschwindigkeit des Druckes proportional und dieser entgegengerichtet ist. Ein ähnliches Signal hätte man ebenso aus einer Ableitung des Drucksignals nach der Zeit gewinnen können. Die Wirkung einer der Änderungsgeschwindigkeit proportionalen Größe (Z.B. Kraft) ist in der Technik allgemein als Dämpfung bekannt. Da bei dem erfindungsgemäßen Verfahren der Innendruck stets durch eine Änderung der äußeren Umströmung beeinflußt wird, können sie auch als aerodynamische Dämpfer betrachtet werden.

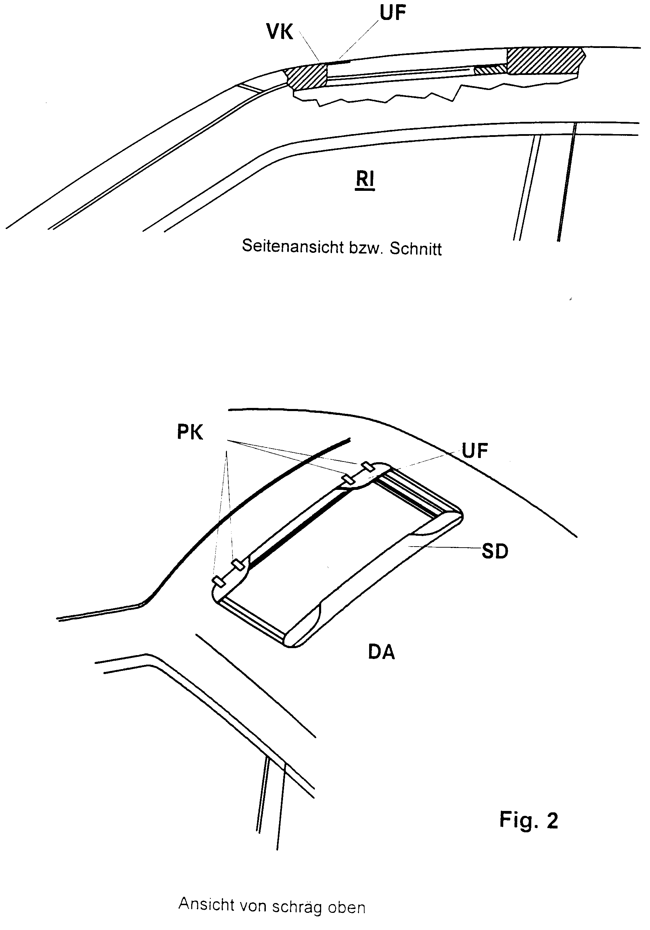

Fig. 2 zeigt eine Ausführung zur Beeinflussung der Strömung an der Vorderkante **VK** des Dachausschnittes **DA** eines Personenkraftwagens durch phasenrichtig oszillierende kleine Umlenkflügel **UF.** Dabei werden in der Nähe der Vorderkante **VK** des Dachausschnittes **DA** (Schiebedach **SD**) des Kraftfahrzeugs ein oder mehrere nebeneinander angeordnete Flügel **UF** so befestigt, daß die Strömung an der Dachoberseite umgelenkt werden kann. In der dargestellten Ausführung sind genau zwei Flügel **UF** vorhanden, wobei piezokeramische Aktuatoren **PK** an der Ober- und Unterseite (Biegeaktuatoren) die Auslenkung der Flügel **UF** bewirken. Besonders geeignete Ausführungsformen der Flügel sind:
- Flügel aus einem formsteifen Material, wobei die Flügel eine oszillierende Bewegung um eine (etwa horizontal und quer zur Fahrtrichtung liegende) Drehachse ausführen kann. Der Antrieb kann translatorisch über Stößel oder direkt an der Drehachse über eine Rotationsbewegung erfolgen.
- Elastische Flügel mit starrer Befestigung am Dach des Kraftfahrzeugs. Die Umlenkung der Strömung erfolgt durch Änderung der Flügelkrümmung.

Geeignete Aktuatoren zur Bewegung oder Krümmung der Flügel sind z.B. elektro-dynamische Aktuatoren (z.B. eine Lautsprecherspule), Elektromotoren, piezo-keramische Aktuatoren, pneumatisch oder hydraulisch betätigte Kolben.

Die Flügel verursachen durch eine Winkel- oder eine Krümmungsänderung eine Umlenkung der Strömung über dem Innenraum. Der bereits beschriebene Regelkreis sorgt dafür, daß die Umlenkung der Außenströmung den Druckänderungen im Innenraum entgegenwirkt.

Das Verfahren funktioniert weitgehend unabhängig von den Abmessungen der Flügel. In einer Ausführungsform wurden zwei Klappen (Erstreckung über ca. 50% der Vorderkante, Tiefe ca. 10% der Öffnungslänge) mit einem flexiblen Klebeband unmittelbar an der Vorderkante des Dachausschnittes befestigt. Die Betätigung erfolgt über zwei in der Mitte der Klappen an deren Hinterkante angreifende Stößel, die ihrerseits von zwei Lautsprecherspulen (Lautsprecher ohne Membran) angetrieben werden.

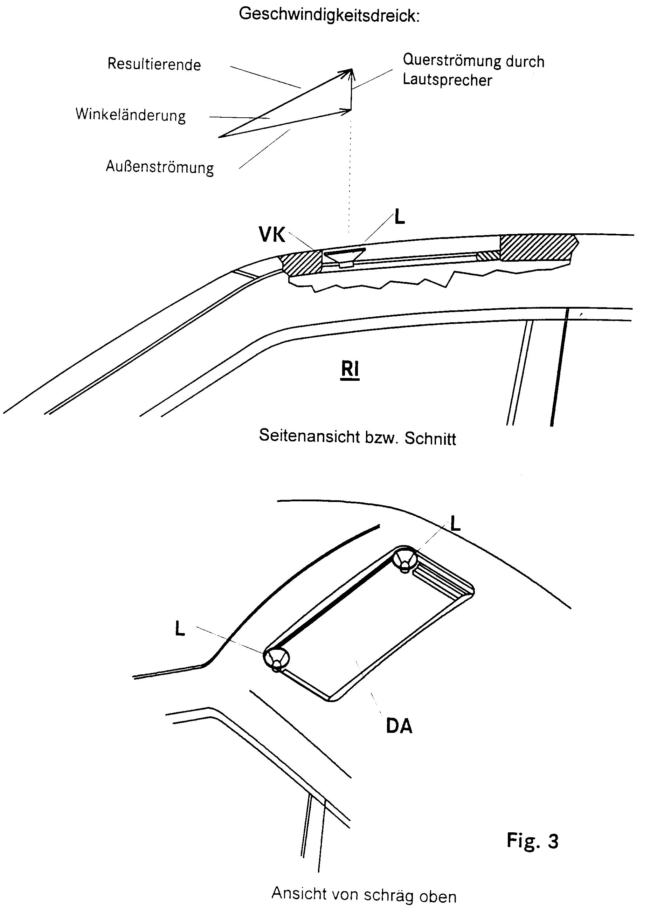

Fig. 3 zeigt eine weitere erfindungsgemäße Ausführung, bei der zur Beeinflussung der Außenströmung an der Vorderkante **VK** des Dachausschnittes **DA** ein oder mehrere Lautsprecher **L** eingesetzt werden. Die Lautsprechermembranen liegen bevorzugt parallel zu - und nur wenige Millimeter unter der Dachoberfläche des Fahrzeugs und die Membranflächen wirken nach außen.

Der oder die Lautsprecher **L** können sowohl vor als auch unmittelbar nach der Vorderkante des Dachausschnittes angeordnet werden. Als sehr wirksam hat sich die dargestellte Anordnung erweisen, bei der jeweils ein Lautsprecher **L** in den vorderen Ecken des Dachausschnittes **DA** angeordnet ist. Falls mehrere Lautsprecher verwendet werden, müssen deren Membranen gleichphasig schwingen.

Die Lautsprecher wirken wie Kolbenpumpen, die Luft quer zur Außenströmung einblasen bzw. absaugen. Durch die Überlagerung der Geschwindigkeitsvektoren von Außenströmung und der vom Lautsprecher verursachten Querströmung (das Geschwindigkeitsdreieck ist zur Veranschaulichung ebenfalls eingezeichnet), entstehen die notwendigen Richtungsänderungen der Außenströmung. Der bereits beschriebene Regelkreis sorgt dafür, daß die Umlenkung der Außenströmung den Druckänderungen im Innenraum entgegenwirkt.

In einer Ausführung wurden an einem Kraftfahrzeug zwei Lautsprecher von ca. 6 cm Membrandurchmesser, die in den beiden vorderen Ecken des Dachausschnittes montiert waren, erfolgreich eingesetzt.

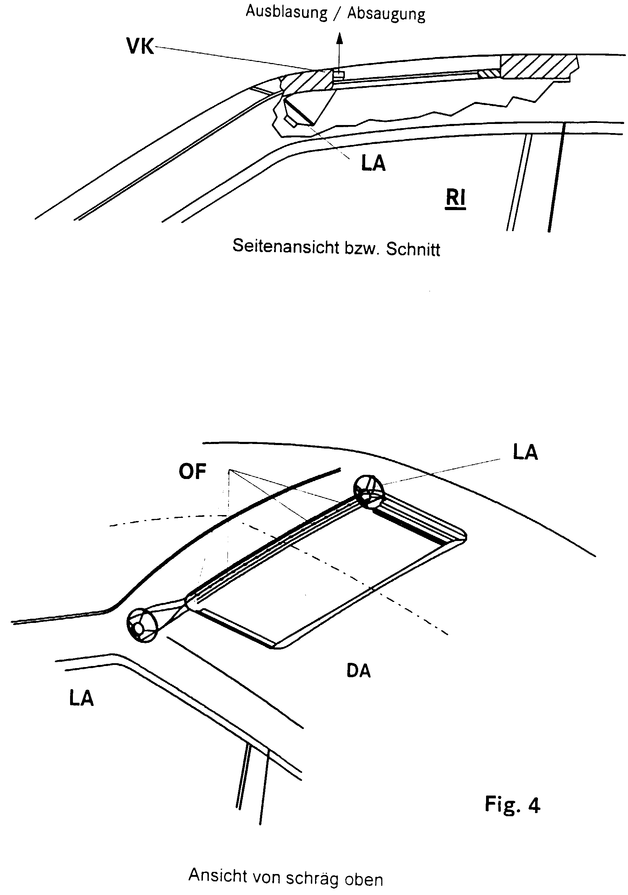

Die Fig. 4 zeigt eine weitere Ausführung des erfindungsgemäßen Verfahrens. Alternativ zu der Ausführung nach Fig. 3 wird hier die Beeinflussung der Außenströmung durch Ausblasen oder Absaugen von gasförmigen oder flüssigen Medien erreicht. Dazu sind in der Nähe der Vorderkante **VK** es Dachausschnittes **DA** Öffnungen **OF** angeordnet, mittels denen die Medien, z.B. Luft, quer zur Außenströmung eingeblasen oder abgesaugt werden können. Die Öffnungen **OF** können, wie in der Fig. dargestellt, über die gesamten Länge der Vorderkante verteilt angeordnet sein. Möglich ist aber auch, die Öffnungen auf einzelnen Teilbereichen entlang der Vorderkante anzuordnen. Als Pumpe sind in der dargestellten Ausführungsform zwei Lautsprecher **LA** vorhanden, die jeweils seitlich, bevorzugt mit einem Abstand zur Vorderkante **VK** angeordnet sind. Ebenfalls geeignet sind oszillierende Pumpen, z.B. Kolbenpumpen.

Durch die Überlagerung der Geschwindigkeitsvektoren der Außenströmung und der durch das Ausblasen oder Absaugen entstehenden Strömung ergeben sich die notwendigen Richtungsänderungen der Außenströmung. Der bereits beschriebene Regelkreis sorgt dafür, daß die Umlenkung der Außenströmung den Druckänderungen im Innenraum entgegenwirkt.

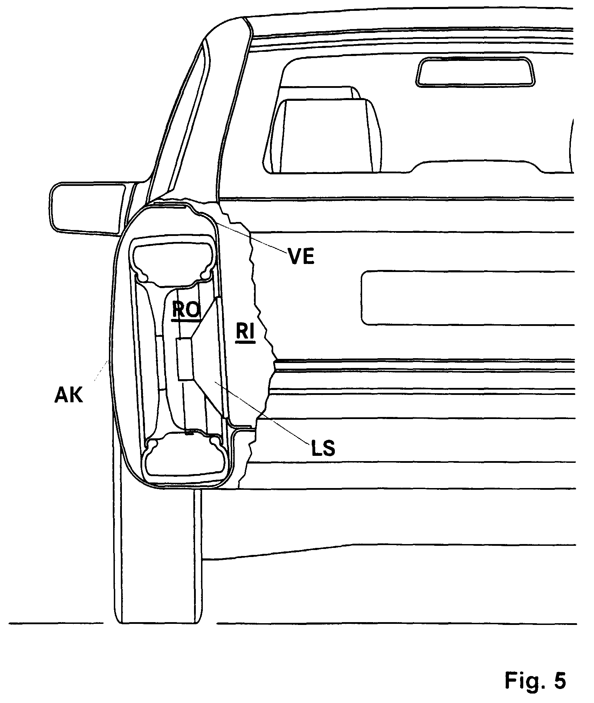

Fig. 5 zeigt eine weitere erfindungsgemäße Ausführung. Hier erfolgt die Beeinflussung der Außenströmung durch Erzeugung von Druckänderungen im Innenraum eines PKW mittels eines oder mehrerer Lautsprecher. Ein solcher Lautsprecher **LS** wird im Innenraum **RI** derart angeordnet, daß eine Membranoberfläche frei in den Innenraum wirken kann, während die Rückseite der Membranfläche bevorzugt in einen möglichst großen Hohlraum **HO** wirkt, der zum Innenraum **RI** hin abgedichtet ist. Ein typisches Beispiel ist der Einbau des Lautsprechers **LS** zwischen die Innenverkleidung **VE** und die Außenwand **AK** (z.B. Seitenwand, Dach, Boden) der Karosserie, wie in der Fig. 5 im einzelnen dargestellt. Der Lautsprecher **LS** ist hier in der Verkleidung **VE** des Reserverades im Kofferraum des Kraftfahrzeugs eingebaut.

Der Lautsprecher wirkt als Pumpe, die im Innenraum Druckänderungen verursacht. Beim Druckausgleich durch den Schiebedachausschnitt (offenes Dach) entstehen Strömungen quer zur Außenströmung. Die Überlagerung der Strömungsvektoren führt, besonders an der Vorderkante des Dachausschnittes, in der bereits erläuterten Weise zur gewünschten Richtungsänderung der Außenströmung. Der bereits beschriebene Regelkreis sorgt dafür, daß die Umlenkung der Außenströmung den Druckveränderungen im Innenraum entgegenwirkt.

Besonders vorteilhaft kann ein bereits im Fahrzeug vorhandener Lautsprecher verwendet werden, z.B. der Lautsprecher für die fahrzeugeigene Radioanlage. Anstatt eines Lautsprechers kann aber auch eine oszillierende Pumpe, z.B. eine Kolbenpumpe eingesetzt werden.

In der Anwendung hat sich gezeigt, daß in handelsüblichen PKWs der Einsatz von nur einem Lautsprecher mit etwa 25 cm Membrandurchmesser zum gewünschten Resultat führt. Lösungen mit kleineren Lautsprechern sind aber ebenfalls realisierbar. Die erforderliche Verstärkerleistung zur Reduzierung eines bereits vorhandenen Schiebedachwummerns beträgt kurzzeitig ca. 20 Watt. Ist der Wummervorgang einmal unterbrochen, sinkt - wegen des fehlenden Eingangssignals (Wummerpegel) - auch die Ausgangsleistung des Verstärkers. Es genügen dann einige mW um ein erneutes Einschwingen zum Wummern zu verhindern.

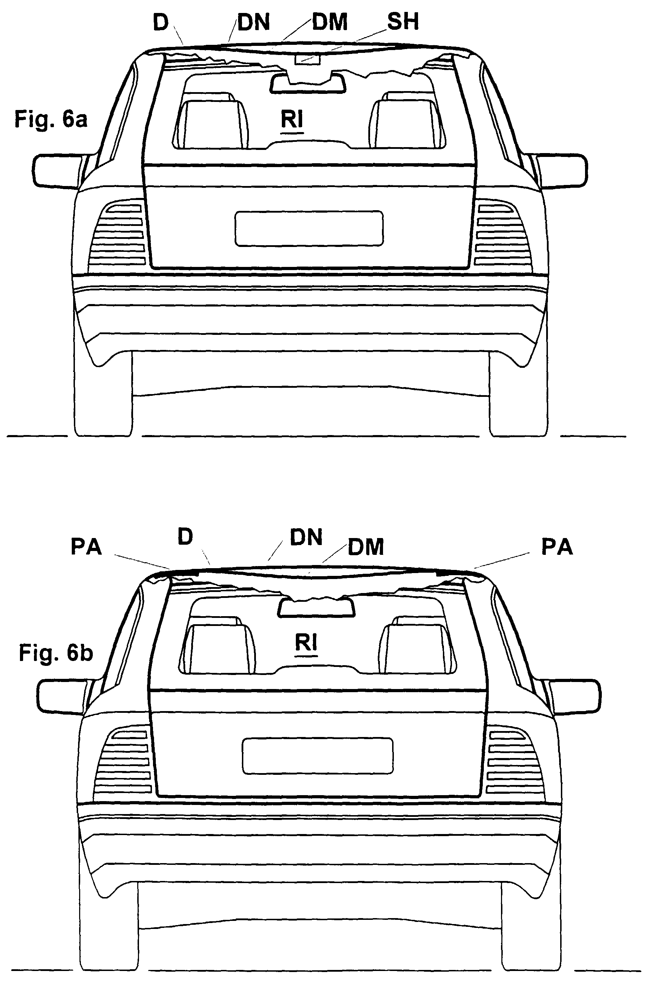

Eine weitere Möglichkeit zur Beeinflussung der Außenströmung mittels phasenrichtiger Erzeugung von Druckänderungen im Innenraum besteht darin, Teilbereiche der den Innenraum begrenzenden Fläche kontrolliert zu Oszillationen anzuregen. Zwei Beispiele hierfür sind in Fig. 6a, 6b dargestellt.

Die Anregung der Oszillation kann dabei z.B. durch einen Shaker oder einen piezo-keramischen Aktuator erfolgen.
Als oszillierende Teile kommen insbesondere die Wände, das Dach oder der Boden der Karosserie oder eine Fahrzeugscheibe sowie Teilbereiche dieser Teile in Frage.

Shaker ist der Sammelbegriff für Geräte, die nach einem vorgegebenen Sollsignal, das typischerweise zeitlich stark variiert, Kräfte erzeugen. Übliche Ausführungsformen sind z.B. elektro-dynamische Shaker, die im Prinzip wie eine Lautsprecherspule arbeiten. Anstelle der Membran werden dann die Kräfte auf das zu "schüttelnde" Testobjekt übertragen.
Eine weitere Ausführungsform besteht aus einer großen Masse (z. B. einige 100 g), die von piezo-keramischen Aktuatoren in Schwingungen versetzt wird. Die aus Masse und Beschleunigung herrührende Kraft wird vom Fußpunkt des Shakers auf den Probanden übertragen.

Für die Anregung eines Autodachs ist insbesondere eine Kombination aus den beiden vorgenannten Ausführungsformen geeignet. Eine große Masse wird (anstelle der Membran) durch eine Lautsprecherspule in Schwingungen versetzt. Die resultierende Massenkräfte werden auf die Karosserie übertragen und regen diese zu Schwingungen an.
Im weiteren Sinne können auch hydraulische oder pneumatisch betätigbare Kolben als Shaker betrachtet werden, wenn sie so angesteuert werden können, daß sie schnell variierende Kräfte entsprechend einem vorgegebenen Sollsignal erzeugen können.

Fig. 6 a zeigt eine Ausführung, bei dem das Dach **D** eines Kraftfahrzeugs mittels eines Shakers **SH** zu Oszillationen angeregt wird. Der Shaker **SH** ist in hier auf der Innenseite des Dachs **D**, und zwar im wesentlichen in der Dachmitte angeordnet. **DN** bezeichnet das Dach **D** im Normalzustand, **DM** bei maximaler Amplitude.

Fig. 6b zeigt eine Ausführung, bei dem das Dach **D** eines Kraftfahrzeugs durch zwei piezo-keramische Aktuatoren **PA** zu Oszillationen angeregt wird. Der beiden Aktuatoren **PA** sind an gegenüberliegenden Seiten des Dachs **D** angeordnet.

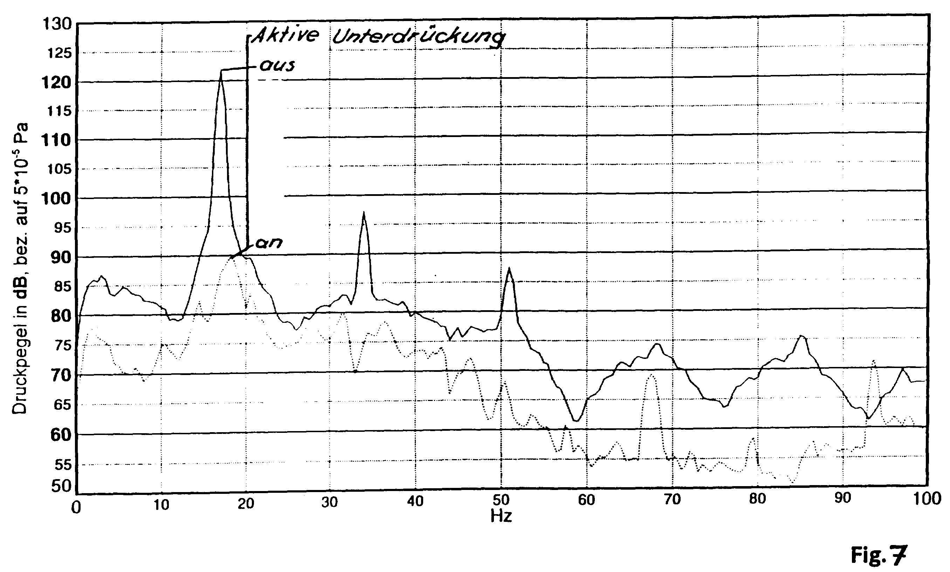

Die in Fig. 7 dargestellten Frequenzspektren wurden mit einem Lautsprechereinbau entsprechend Fig. 5 bei einer Fahrtgeschwindigkeit von ca. 55 km/h gemessen. Die obere Linie zeigt das Spektrum ohne Einsatz des erfindungsgemäßen Verfahrens. Man erkennt bei ca. 17 Hz einen ausgeprägten Peak - dies ist das typische Anzeichen für Schiebedachwummern. Wird das erfindungsgemäße Verfahren eingesetzt (untere Linie), verschwindet dieser Peak.

Fig. 8 zeigt die über der Zeit aufgetragenen gemessenen Drücke im Innenraum für den gleichen Vorgang wie Fig. 7. Wird das erfindungsgemäße Verfahren aktiviert, nehmen die Druckamplituden ab, bis sie nach kurzer Zeit einen neuen, annähernd stationären Zustand erreichen.

## Patentansprüche

1. Verfahren zur Unterdrückung periodischer Druckänderungen in einem von einer Außenströmung umströmten und mit einer Öffnung (**DA**) versehenem Hohlraum (**RI**), **dadurch gekennzeichnet,** daß periodisch und phasenrichtig eine der aktuellen Druckänderung im Innern des Hohlraums (**RI**) entgegengerichtete Änderung der Strömungsrichtung der Außenströmung bewirkt wird.

2. Verfahren nach Anspruch 1, **dadurch gekennzeichnet,** daß die Änderung der Strömungsrichtung der Außenströmung durch mindestens einen Umlenkflügel (**UF**) im Bereich der Vorderkante (**VK**) der Öffnung (**DA**) bewirkt wird.

3. Verfahren nach Anspruch 2, **dadurch gekennzeichnet,** daß Umlenkflügel (**UF**) aus einem formsteifen Material eingesetzt werden, die eine Bewegung um eine Drehachse ausführen.

4. Verfahren nach Anspruch 2, **dadurch gekennzeichnet**, daß Umlenkflügel (**UF**) aus einem elastischen Material eingesetzt werden, deren Krümmung verändert wird.

5. Verfahren nach Anspruch 3 oder 4, **dadurch gekennzeichnet,** daß zur Bewegung oder Krümmung des Umlenkflügels (**UF**) ein Elektromotor, ein piezokeramischer Aktuator (**PK**), ein pneumatisch oder hydraulisch betätigbarer Kolben oder ein elektro-dynamischer Aktuator, z.B. eine Lautsprecherspule, eingesetzt wird.

6. Verfahren nach Anspruch 1, **dadurch gekennzeichnet**, daß die Änderung der Strömungsrichtung der Außenströmung durch eine Strömung quer zur Außenströmung an der Vorderkante (**VK**) der Öffnung (**DA**) bewirkt wird.

7. Verfahren nach Anspruch 6, **dadurch gekennzeichnet**, daß die Strömung quer zur Außenströmung erzeugt wird durch mindestens einen Lautsprecher (**L**), der im Bereich der Vorderkante (**VK**) der Öffnung (**DA**) angeordnet ist.

8. Verfahren nach Anspruch 6, **dadurch gekennzeichnet,** daß die Strömung quer zur Außenströmung erzeugt wird durch Ausblasen oder Absaugen eines gasförmigen oder flüssigen Mediums im Bereich der Vorderkante (**VK**) der Öffnung (**DA**).

9. Verfahren nach Anspruch 8, **dadurch gekennzeichnet,** daß das Ausblasen oder Absaugen des Mediums durch Kopplung mit mindestens einer oszillierenden Pumpe oder einem Lautsprecher (**LA**) bewirkt wird.

10. Verfahren nach Anspruch 6, **dadurch gekennzeichnet**, daß die Strömung quer zur Außenströmung erzeugt wird durch die Erzeugung von Druckänderungen im Hohlraum (**RI**) und dem den Druckänderungen folgenden Druckausgleich.

11. Verfahren nach Anspruch 10, **dadurch gekennzeichnet,** daß die Erzeugung von Druckänderungen im Hohlraum (**RI**) durch mindestens eine im Hohlraum angeordnete oszillierenden Pumpe oder mindestens einen Lautsprecher (**LS**) erfolgt, wobei dessen eine Membranoberfläche frei in den Hohlraum (**RI**) wirken kann und die andere Membranoberfläche zum Hohlraum (**RI**) hin abgedichtet ist.

12. Verfahren nach Anspruch 11, **dadurch gekennzeichnet,** daß die oszillierende Pumpe eine Kolbenpumpe ist.

13. Verfahren nach Anspruch 10, **dadurch gekennzeichnet**, daß die Erzeugung von Druckänderungen im Hohlraum (**RI**) durch mindestens einen gesteuert oszillierenden Teil (**D**) der den Hohlraum (**RI**) begrenzenden Flächen bewirkt wird.

14. Verfahren nach Anspruch 13, **dadurch gekennzeichnet,** daß die Anregung der Oszillation durch einen Shaker (**SH**) oder einen piezo-keramischen Aktuator (**PA**) erfolgt.

15. Verfahren nach einem der vorangehenden Ansprüche, **dadurch gekennzeichnet,** daß der Hohlraum (**RI**) der Innenraum eines Kraftfahrzeugs ist und die Öffnung (**DA**) der Schiebedachausschnitt des Kraftfahrzeugs ist.

16. Verfahren nach Anspruch 7 und 15, **dadurch gekennzeichnet**, daß genau zwei Lautsprecher (**L**) eingesetzt werden, die an den vorderen beiden Ecken des Schiebedachausschnitts (**DA**) angeordnet werden.

17. Verfahren nach Anspruch 11 und 15, **dadurch gekennzeichnet,** daß der Lautsprecher (**LS**) zwischen Innenverkleidung (**VE**) und Außenwand (**AK**) der Karosserie angeordnet ist.

18. Verfahren nach Anspruch 15, soweit er auf einen der Ansprüche 13 oder 14 zurückbezogen ist, **dadurch gekennzeichnet,** daß der gesteuert oszillierende Teil der den Hohlraum (**RI**) begrenzenden Flächen die Wand, das Dach (**D**) oder der Boden der Karosserie oder eine Fahrzeugscheibe oder Teilbereiche der vorgenannten Teile sind.

19. Verfahren nach einem der vorangehenden Ansprüche, **dadurch gekennzeichnet,** daß der Hohlraum ein beliebiger, nach außen geöffneter Raum an einem Flugzeug, einer Rakete oder einem Schiff ist.

20. Verfahren nach einem der vorangehenden Ansprüche, **dadurch gekennzeichnet,** daß die der aktuellen Druckänderung im Innern des Hohlraums entgegengerichtete Änderung der Strömungsrichtung der Außenströmung mittels eines elektro-dynamischen Aktuators bewirkt wird, zu dessen Ansteuerung keine zusätzliche Phasenverschiebung eingesetzt wird.
